# EUROPÄISCHE PATENTSCHRIFT

(11) **EP 0 726 024 B1**
(45) Veröffentlichungstag und Bekanntmachung des Hinweises auf die Patenterteilung: **10.06.1998**
(21) Anmeldenummer: 96101478.4
(22) Anmeldetag: 02.02.1996
(51) Int. Cl.: A01C 15/00, A01M 7/00

(54) **Verfahren zum Steuern und/oder Regeln von Dosiereinrichtungen landwirtschaftlicher Verteilmaschinen**
Method for controlling and/or regulating dosing devices of agricultural spreaders
Méthode de commande et/ou de régulation de doseurs d'épandeurs agricoles

(30) Priorität: 13.02.1995 DE 19504703
(43) Veröffentlichungstag der Anmeldung: 14.08.1996
(73) Patentinhaber: Amazonen-Werke H. Dreyer GmbH & Co. KG, D-49205 Hasbergen (DE)
(72) Erfinder: Scheufler, Bernd, Dr., D-49205 Hasbergen (DE)

(56) Entgegenhaltungen:
- EP-A- 0 181 308
- EP-A- 0 578 988
- WO-A-91/03148
- DE-A- 4 322 293
- US-A- 5 220 876

## Beschreibung

Die Erfindung betrifft ein Verfahren gemäß des Oberbegriffes des Patentanspruches 1.

Ein derartiges Verfahren ist beispielsweise in der deutschen Offenlegungsschrift 43 22 293 beschrieben.

Bei diesem bekannten Verfahren sind in einem Rechner die Geographie der Betriebsflächen (Felder) und die Daten für die Saatgut- und Düngerausbringung eingespeichert. Weiterhin kann dieser Rechner die Nährstoffversorgung der einzelnen Betriebsflächen an Hand der Geographie der Felder nach einem Koordinatensystem abgelegt sein. Der Standort der Verteilmaschine auf dem Acker wird über das so genannte GPS-System bestimmt.

Während des Ausbringvorganges mit der landwirtschaftlichen Verteilmaschine wird von dem Rechner aus die Ausbringmenge entsprechend der in dem Rechner abgelegten Daten gesteuert. Der Prozessrechner arbeitet mit einem GPS-System zusammen, um den exakten Standort der Maschine zu ermitteln.

Der Erfindung liegt die Aufgabe zugrunde, das Ausbringverhalten der landwirtschaftlichen Verteilmaschine in einfacher Weise zu verbessern.

Diese Aufgabe wird erfindungsgemäß dadurch gelöst, daß der Rechner in Abhängigkeit der aktuellen Fahrgeschwindigkeit eine Vorausberechnung durchführt, zu welchem Zeitpunkt die Ausbringorgane der Verteilmaschine tatsächlich an dem Standort sich befindet bzw diesen erreicht hat und an dem die dort festgelegte Menge Material ausgebracht werden soll. Infolge dieser Maßnahme wird auf einfachste Weise sichergestellt, daß auch tatsächlich in jedem Falle die Menge Material, Dünger, Saatgut oder Spritzmittel in der festgelegten Menge an dem festgelegten Standort ausgebracht wird. Es wird somit also durch den Rechner die Totzeit für die Materialförderung von der Dosiereinheit zu den Ausbringorganen berücksichtigt.

Um eine genaue Vorausberechnung durchführen zu können, ist vorgesehen, daß die Vorausberechnung fortlaufend während des gesamten Ausbringvorganges in festgelegten Zeitintervallen erfolgt. Die Standortberechnung erfolgt aufgrund des vorangegangenen Bewegungsablaufes (sogenannte Extrapolation).

Die Vorausberechnung erfolgt in einfacher Weise aufgrund einer abgespeicherten Karte in Verbindung mit dem Bewegungsverlauf der landwirtschaftlichen Maschine auf dem Feld.

In dem Rechner ist das Regel- und Zeitverhalten der Dosiereinrichtung abgespeichert und wird bei der Totzeitberechnung berücksichtigt, so daß in exakter Weise die vorbestimmte Menge Material an der vorbestimmten Stelle auch tatsächlich ohne Verzögerung ausgebracht wird.

Desweiteren wird eine Vorausberechnung bei spitz zulaufenden Flächen vorgenommen, um die Arbeitsbreite der Fläche anzupassen. Somit wird also sichergestellt, daß das Feld optimal mit Material versorgt wird, jedoch kein Material über die Feldrandgrenze ausgebracht wird.

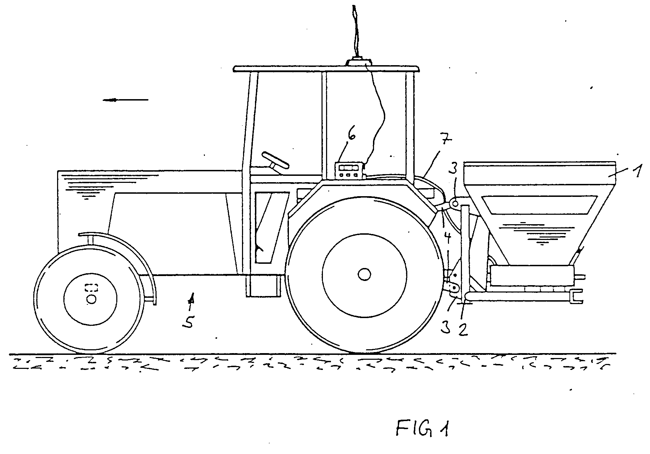

Weitere Einzelheiten der Erfindung sind den übrigen Unteransprüchen, der Beispielsbeschreibung und den Zeichnungen zu entnehmen. Hierbei zeigen
- Fig.1: einen an einem Ackerschlepper angebauten Schleuderdüngerstreuer in der Seitenansicht,
- Fig.2: eine schematische Darstellung des Abstreuens eines Feldes, mit Angabe der Ein- und Ausschaltung der Dosierorgane eines Zweischeibendüngersteuers, symbolisiert durch die Streufächerumrisse,
- Fig.3: die schematische Darstellung des Grenzstreuens in einem Teilbereich des Ackers,
- Fig.4: die schematische Darstellung des Abstreuens der ersten Spur und Angabe der Position zur Abschaltung der Dosierorgane bei Erreichen des Feldendes und
- Fig.5: die schematische Darstellung und Angabe der Position für die Einschaltung der Dosierorgane am Feldanfang.

Die Erfindung wird beispielhaft am Einsatzfall eines Zentrifugaldüngerstreuers erläutert. Selbstverständlich läßt sich das erfindungsgemäße Ein- und Ausschalten so wie die entsprechenden Veränderung der Ausbringmenge durch die Regelung und/oder Steuerung der Dosierorgane auch bei anderen landwirtschaftlichen Maschinen, beispielsweise bei einer Feldspritze oder einer Sämaschine etc. einfach realisieren.

Die als Zweischeibendüngerstreuer ausgebildete Vorrichtung zum Ausbringen von landwirtschaftlichen Material, hier Düngemittel, weist den Vorratsbehälter 1, den Rahmen 2 und die Dreipunktkupplungselemente 3 auf. Über die Dreipunktkupplungselemente 3 ist der Schleuderdüngerstreuer an den Dreipunktkraftheber 4 des Ackerschleppers 5 angeordnet. Der Vorratsbehälter 1 ist in bekannter und daher nicht in näher dargestellter Weise durch ein dachförmiges Mittelteil in zwei Trichterspitzen unterteilt. Am unteren Ende der Trichterspitzen befindet sich jeweils ein Dosierorgan, welche unabhängig voneinander über den auf dem Ackerschlepper angeordneten Rechner 6 ein- und auszuschalten bzw. so zu regeln und/oder steuern sind, daß die Mengen des auszubringenden Düngers wunschgemäß eingestellt werden können. Die Bedienungselemente der Dosierorgane sind über ein Kabel 7 mit dem Rechner 6 verbunden. Der Rechner 6 weist ein Speichermedium auf, in welchem eine Bodenkarteneinrichtung eingespeichert ist. Weiterhin benutzt der Rechner 6 einen Positionsgeber zum Erzeugen von Feldkoordinatensignale zur Abgabe der relativen Position des Fahrzeugs auf dem Feld bei seiner Bewegung. Dieser Positionsgeber kann beispielsweise auf dem GPS-System (Global Position System) aufgebaut sein.

Der Rechner 6 ist so ausgestattet, daß die Dosierorgane und/oder die Arbeitsbreite des Schleuderdüngerstreuers entsprechend der Feldrandkontur bzw. der Form des Feldes steuer- und/oder regelbar ist. Desweiteren ist die Nährstoffversorgung, der Unkrautbefall, der Schädlingsbefall etc. nach Standort des Feldes in dem Rechner 6 eingespeichert.

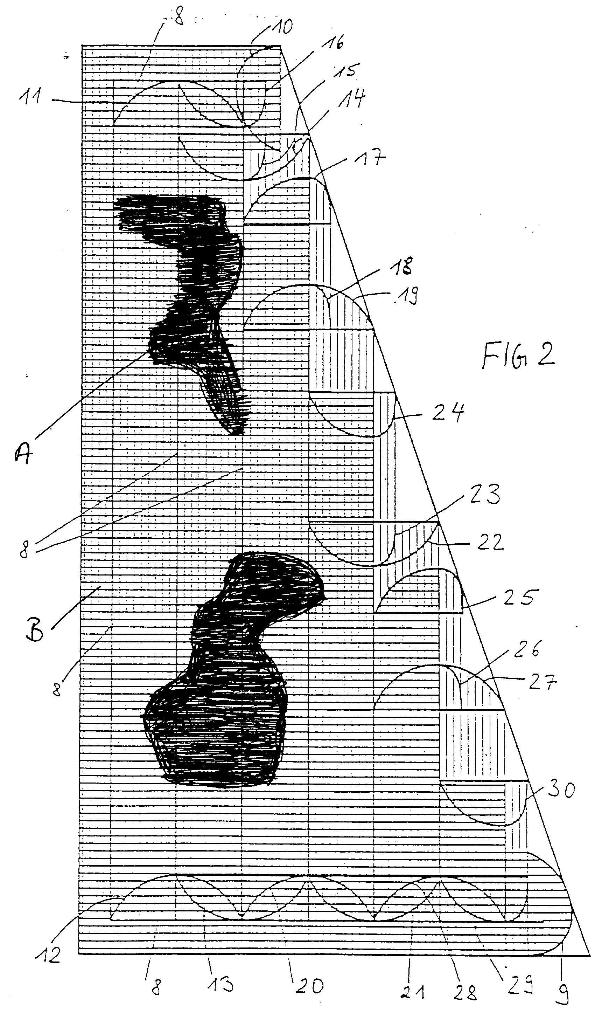

An Hand der Fig.2-5 wird im einzelnen das ein- und ausschalten sowie das Steuern und/oder Regeln der Dosierorgane an bestimmten Positionen des Feldes näher erläutert.

In dem Speichermedium des Rechners 6 ist die Feldkontur, die Göße und Länge des Feldes, wie es beispielhaft in Fig. 2 abgebildet ist, eingespeichert. Darüber hinaus ist in dem Rechner 6 die Nährstoffversorgung, wie sie ebenfalls in Fig.2 vereinfacht abgebildet ist, eingespeichert. Der Einfachheit halber sind in Fig.2 zwei verschiedene Kategorien von Nährstoffversorgungen eingespeichert, wobei die dunkel angelegten Felder A eine Unterversorgung im Vergleich zum übrigen Feld B anzeigen.

Weiterhin sind in dem Speichermedium des Rechners 6 die Arbeitsbreite und Verteilcharakteristik der Verteilmaschine 1 eingespeichert. In dem hier dargestellten beispielhaften Fall, der anhand eines Zweischeibendüngerstreuers erläutert wird, ist die Größe und Lage des Streufächers bei der jeweils gewählten Arbeitsbreite und dem vorliegenden Einsatzfall, wie Grenzstreuen, halbseitiges Streuen, beidseitiges Streuen, unsymmetrisches Streuen etc. eingespeichert, um die Dosierorgane und/oder Arbeitsbreite der Vorrichtung entsprechend der Feldkontur bzw. der Form des Feldes sowie der Nährstoffversorung steuern und/oder regeln zu können.

Weiterhin sind in dem Speichermedium des Rechners 6 die Positionen zur Einschaltung und Abschaltung sowie der Einstellung der Dosierorgane der Vorrichtung auf dem Acker eingespeichert. In Verbindung mit dem Positionsgeber zur Erzeugung von Feldkoordinatensysteme werden die Dosierorgane dann ein-oder ausgeschaltet.

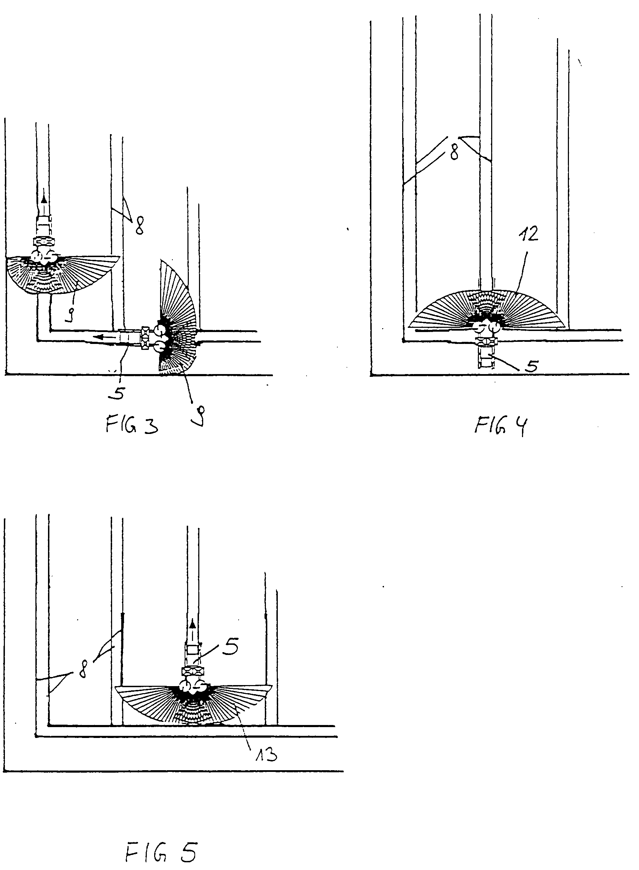

Auf der Abbildung in Fig.2 sind die Fahrgassen mit den dick durchzogenen Linien dargestellt, während sie in Fig.3-5 mit den beiden Linien 8 dargestellt sind.

Wie Fig.2 zeigt, wird zunächst der Feldrand im Grenzstreuverfahren abgestreut. Mit dem Streuvorgang wird an der rechten unteren Seite begonnen. Wenn der Schlepper sich an der Position befindet, in welcher der mit 9 bezeichnete Streufächer entsteht, werden die Dosierorgane automatisch von dem Rechner 6 eingeschaltet. Aufgrund dieser automatischen Einschaltung der Dosierorgane über den Rechner 6, während der Ackerschlepper sich mit dem Schleuderdüngerstreuer bereits mit der vorgesehenen Fahrgeschwindigkeit in der Fahrgasse 8 vorwärts bewegt, werden an der richtigen Stelle die Dosierorgane eingeschaltet, so daß der Acker von Anfang an exakt ausgestreut wird. Hierbei nimmt der Rechner in Abhängigkeit von der aktuellen Fahrgeschwindigkeit eine Vorausberechnung vor, zu welchem Zeitpunkt die Verteilmaschine tatsächlich das Material an der richtigen Stelle ausbringt und an welchem Standort sich die Verteilmaschine befindet, so daß an dem jeweils bestimmten Ort die hierfür festgelegte Menge Material ausgebracht wird, bzw. die Dosierorgane entsprechend einzuschalten sind. Diese Vorausberechnung erfolgt fortwährend in festgelegten Zeitintervallen, damit die Totzeit für die Materialförderung von der Dosiereinheit zu den Ausbringorganen berücksichtigt wird. Hierduch wird vermieden, daß Material zu früh oder zu spät ausgebracht wird. Desweiteren wird gewährleistet, daß immer an der vorgesehenden Stelle die richtige Menge Material ausgebracht wird.

Die Fig.3 zeigt die Fahrt des Schleppers 5 mit dem Schleuderdüngerstreuer und dem Streufächer während des Abstreuens des Feldrandstreifens in schematischer Darstellungsweise. Wenn der Schlepperfahrer die in dem Ausführungsbespiel U-förmig umlaufende äußere Fahrgasse abgefahren hat, werden die Dosierorgane, wenn der Streufächer sich an der mit 10 bezeichneten Position befindet, abgeschaltet. Hierzu hat der Rechner 6 bereits diese Position entsprechend vorberechnet, so daß auch tatsächlich an dieser Stelle die Dosierorgane so abgeschaltet werden, daß kein Material über die Feldrandgrenze ausgebracht wird. Abschließend wird die zweite parallel zum Feldrand liegende Fahrgasse bestreut. Wenn der Schlepper 5 mit dem Düngerstreuer sich an der Positon befindet, in welcher der mit 11 in Fig.2 eingezeichnete Streufächer entstehen würde und entsteht, werden automatisch von dem Rechner 6 die Dosierorgane eingeschaltet. Hierbei ist wiederum bereits diese Position von dem Rechner 6 in Abhängigkeit der aktuellen Fahrgeschwindigkeit vorausberechnet worden. Wenn der Schlepperfahrer sich mit dem Schleuderdüngerstreuer an der Position befindet, in welcher der mit 12 eingezeichnete Streufächer entsteht, d.h. also am Feldende, wie Fig. 4 zeigt, werden automatisch die Dosierorgane abgeschaltet, so daß keine schädliche Überdüngung am Vorgewende entsteht. Auch diese Position ist bereits vom Rechner anhand der aktuellen Fahrgeschwindigkeit vorausberechnet worden.

Anschließend wird die nächste Fahrgasse befahren. Hierbei werden die Dosierorgane an der Position eingeschaltet, in der der mit 13 bezeichnete Streufächer entsteht, wie dieses auch die Fig. 5 zeigt, der an der Stelle, an welcher der mit 14 bezeichnete Streufächer entsteht, einseitig abgeschaltet wird, so daß der mit 15 bezeichnete einseitge Streufächer entsteht, in dem das rechte Dosierorgan abgeschaltet wird. Auch diese Positon ist wiederum von dem Rechner 6 in Abhängigkeit der aktuellen Fahrgeschindigkeit vorausberechnet worden.

An der mit 16 bezeichneten Stelle, an welcher der einseitige Streufächer eingezeichnet ist, wird entsprechend der Einprogrammierung auch das linke Dosierorgan abgeschaltet. Auch diese Stelle ist bereits von dem Rechner in Abhängigkeit der aktuellen Fahrgeschwindigkeit vorberechnet worden.

Anschließend wird die nächste Streubahn bestreut. Zunächst wird nur das der rechten Schleuderscheibe zugeordnete Dosierorgan an der Stelle, an welche der mit 17 bezeichnete Streufächer entsteht, eingeschaltet. Auch diese Position ist wiederum vom Rechner 6 in Abhängigkeit der aktuellen Fahrgeschwindigkeit vorberechnet worden.

Einseitig wird bis zu der mit 18 bezeichneten Stelle gestreut, wo dann das Dosierorgan der linken Seite zugeschaltet wird, so daß der symetrische mit 16 bezeichnete Streufächer entsteht. Auch diese Position ist bereits wiederum vom Rechner in Abhängigkeit der Fahrgeschwindigkeit vorberechnet worden.

An der Stelle, wo der mit 20 bezeichnete Streufächer entsteht, werden die Dosierorgane wieder abgeschaltet. Auch dieser Zeitpunkt ist wiederum vom Rechenr vorberechnet worden.

Beim Bestreuen der nächsten Bahn wird an der Stelle, an der der mit 21 bezeichnete Streufächer entsteht, eingeschaltet. Auch dieser Zeitpunkt ist widerum vom Rechner in Abhängigkeit der aktuellen Fahrgeschwindigkeit vorberechnet worden.

An der Stelle, an der der mit 22 bezeichnete Streufächer entsteht, wird das rechte Dosierorgan abgeschaltet, so daß dann nur noch mit dem mit 23 bezeichneten Streufächer bis zu der mit 24 bezeichneten Streufächerabbildung weiter gestreut wird. Auch diese Position und dieser Zeitpunkt sind widerum genau vom Rechner in Abhängigkeit der aktuellen Fahrgeschwindigkeit vorberechnet worden.

Beim Bestreuen der nächsten Fahrbahn wird an der Stelle, an der der mit 25 bezeichnete Streufächer entsteht, begonnen, wobei widerum nur das der rechten Schleuderscheibe zugeordnete Dosierorgan eingeschaltet wird. Auch diese Position und Zeitpunkte sind genau vom Rechner in Abhängigkeit der aktuellen Fahrgeschwindigkeit widerum vorberechnet worden.

Dieses einseitige Streuen wird bis zu der Stelle, an der der mit 26 eingezeichnete Streufächer entsteht, fortgefahren. Auch diese Stelle und der Zeitpunkt des Erreichens dieser Stelle sind vom Rechner in Abhängigkeit der aktuellen Fahrgeschwindigkeit vorberechnet worden.

An dieser Stelle wird dann das linke Dosierorgan zugeschaltet, so daß der dann mit 27 bezeichnete Streufächer entsteht. An der Stelle, an welcher der mit 28 bezeichnete Streufächer entsteht, werden alle der Dosierorgane wieder abgeschaltet. Auch dieser Zeitpunkt ist wiederum vom Rechner in Abhängigkeit der aktuellen Fahrgeschwindigkeit vorberechnet worden.

Die letzte Streubahn wird im Ausführungsbeispiel nur einseitig bestreut, wobei dann das linke Dosierorgan an der Stelle eingeschaltet wird, an der der mit 28 bezeichnete Streufächer entsteht. Auch dieser Zeitpunkt ist wiederum vom Rechner in Abhängigkeit der aktuellen Fahrgeschwindigkeit vorberechnet worden. Das Dosierorgan wird an der Stelle dann abgeschaltet, an der der mit 30 bezeichnete Streufächer entsteht. Auch dieser Zeitpunkt ist widerum in Abhängigkeit der aktuellen Fahrgeschwindigkeit vorberechnet worden.

Desweiteren werden bei Erreichen bzw. Verlassen der dunkel gekennzeichneten Bereiche A in Fig.2 die Ausbringmengen abschnittsweise verändert, so daß an den dunkel gekennzeichneten Stellen (Nährstoffunterversorgung) mehr Material ausgebracht wird. Das Erreichen bzw. das Verlassen dieser Stellen der Ausbringorgane der Verteilmaschinen wird von dem Rechner in Abhängigkeit von der aktuellen Fahrgeschwindigkeit vorberechnet, so daß tatsächlich nur in diesem Bereich mehr Material von den Dosierorganen ausgebracht wird.

Durch die vorstehend beschriebenen feldkonturenabhängige und mit Material zu versorgende flächenabhängige Steuerung der Arbeitsorgane (beispielsweise Dosierorgane) einer landwirtschaftlichen Arbeitsmaschine, wie beispielsweise Düngerstreuer, Feldspritze, Sämaschine etc. wird es in exakter Weise automatisch möglich, die Arbeitsorgane oder Dosierorgane sowie deren Anzahl (Arbeitsbreite) im richtigen Augenblick während der Fahrt automatisch in Abhängigkeit des Standortes der Maschine und der Lage der zu berücksichtigenden Flächen entsprechend der Nährstoffversorgung, Unkrautbefall etc. im richtigen Augenblick während der Fahrt ein- und auszuschalten sowie zu verändern.

Die Standortberechnung und die Berechnung der Änderung des Arbeitsverhaltens der Maschine erfolgt aufgrund des vorangegangenen Bewegungsablaufes, einer sogenannten Extrapolation. Desweiteren erfolgt die Vorausberechnung aufgrund einer im Rechner abgespeicherten Karte in Verbindung mit dem tatsächlichen Bewegungsablauf. Hierbei wird in dem Rechner das Regel- und Zeitverhalten der Dosiereinrichtung abgespeichert und bei der Totzeitberechnung berücksichtigt. Hierbei berücksichtigt der Rechner insbesondere bei Feldspritzen die Länge der Förderwege und die Förderzeit des Materials von der Dosiereinheit zu den Ausbringorganen.

## Patentansprüche

1. Verfahren zum Steuern und/oder Regeln von Dosiereinrichtungen landwirtschaftlicher Verteilmaschinen, bei dem in einem Rechner die auszubringende Menge Dünger, Saatgut oder Spritzmittelmengen je Standort und Fläche eingespeichert sind, dadurch gekennzeichnet, daß der Rechner (6) in Abhängigkeit der aktuellen Fahrgeschwindigkeit eine Vorausberechnung durchführt, zu welchem Zeitpunkt die Verteilmaschine (1) tatsächlich an dem Standort sich befindet bzw diesen erreicht hat, an dem jeweils die dort festgelegte Menge Material ausgebracht werden soll.

2. Verfahren nach Anspruch 1, dadurch gekennzeichnet, daß diese Vorausberechnung fortwährend, vorzugsweise in festgelegten Zeitintervallen erfolgt.

3. Verfahren nach einem oder mehreren der vorstehenden Ansprüche, dadurch gekennzeichnet, daß der Rechner (6) die Totzeit für die Materialförderung von der Dosiereinheit zu den Ausbringorganen berücksichtigt.

4. Verfahren nach einem oder mehreren der vorstehenden Ansprüche, dadurch gekennzeichnet, daß der Rechner (6) bei Erreichen des Feldendes vorausberechnet, wann die Ausbringorgane abgeschaltet werden müssen.

5. Verfahren nach einem oder mehreren der vorstehenden Ansprüche, dadurch gekennzeichnet, daß die Standortberechnung aufgrund des vorangegangenen Bewegungsverlaufes erfolgt (sogenannte Extrapolation).

6. Verfahren nach einem oder mehreren der vorstehenden Ansprüche, dadurch gekennzeichnet, daß die Vorausberechnung aufgrund einer im Rechner (6) abgespeicherten Karte in Verbindung mit dem tatsächlichen Bewegungsverlauf erfolgt.

7. Verfahren nach einem oder mehreren der vorstehenden Ansprüche, dadurch gekennzeichnet, daß in dem Rechner (6) das Regel- und Zeitverhalten der Dosiereinrichtung abgespeichert ist und bei der Totzeitberechnung berücksichtigt wird.

8. Verfahren nach einem oder mehreren der vorstehenden Ansprüche, dadurch gekennzeichnet, daß in dem Rechner (6) die Länge der Förderwege und die Förderzeit des Materials von der Dosiereinheit zu den Ausbringorganen abgespeichert ist.

9. Verfahren nach einem oder mehreren der vorstehenden Ansprüche, dadurch gekennzeichnet, daß Maßnahmen zur Veränderung der Arbeitsbreite und die Steuerung der Dosierorgane und Ausbringorgane für die Vergrößerung oder Verkleinerung der Arbeitsbreite zur Anpassung an die Feldkontur im Rechner (6) abgespeichert sind, daß entsprechend des Konturverlaufes die Veränderung der Arbeitsbreite gesteuert wird, und daß hierbei ebenfalls eine Vorausberechnung erfolgt.

10. Verfahren nach einem oder mehreren der vorstehenden Ansprüche, dadurch gekennzeichnet, daß die Veränderung der Arbeitsbreite durch Teilbreitenschaltung oder Veränderung der Streufächer realisiert wird.

## Claims

1. Method for controlling and/or regulating metering devices of agricultural spreaders, where the amount of fertiliser, seeds or spray to be broadcast per location and surface is stored in a computer, characterised in that the computer (6) calculates a prediction in dependence on the actual traveling speed, at which time the spreader (1) is actually situated at the location or has reached the same, where the amount of material prescribed for that respective location is to be broadcast.

2. Method according to claim 1, characterised in that this prediction is continuous, preferably occurring at prescribed intervals,

3. Method according to one or several of the preceding claims, characterised in that the computer (6) takes into account the dead time for the conveying of the material from the metering unit to the discharging means.

4. Method according to one or several of the preceding claims, characterised in that the computer (6) predicts when reaching the end of the field when the discharging means have to be switched off.

5. Method according to one or several of the preceding claims, characterised in that the location calculation is produced on account of the previous sequence of movement (so-called extrapolation).

6. Method according to one or several of the preceding claims, characterised in that the prediction is calculated on account of a card stored in the computer (6) in conjunction with the actual sequence of movements.

7. Method according to one or several of the preceding claims, characterised in that the regulating and time behaviour of the metering device is stored in the computer (6) and is taken into consideration when calculating the dead time.

8. Method according to one or several of the preceding claims, characterised in that the length of the conveying paths and the conveying time of the material from the metering device to the discharging means is stored in the computer (6).

9. Method according to one or several of the preceding claims, characterised in that measures to alter the working width and the control of the metering means and discharging means for the enlargement of or the reduction of the working width for the adjustment to the contour of the field are stored in the computer (6), in that the alteration to the working width is controlled according to the development of the contour, and in that a prediction is calculated in this case also.

10. Method according to one or several of the preceding claims, characterised in that the alteration to the working width is realised through partial width switching or altering the broadcasting compartments.

## Revendications

1. Procédé de commande et/ou de réglage de doseurs d'épandeurs agricoles, selon lequel un calculateur contient en mémoire les quantités à distribuer d'engrais, de semence ou de produit à pulvériser, suivant l'emplacement et la surface,
caractérisé en ce que
le calculateur (6) effectue un calcul par anticipation en fonction de la vitesse actuelle de déplacement, pour déterminer l'instant auquel la machine d'épandage (1) se trouve effectivement à l'emplacement ou atteint l'emplacement où doit être distribuée la quantité de produit fixée pour cet endroit.

2. Procédé selon la revendication 1,
caractérisé en ce que
ce calcul par anticipation se fait en continu, de préférence à des intervalles de temps fixes.

3. Procédé selon l'une ou plusieurs des revendications précédentes,
caractérisé en ce que
le calculateur (6) tient compte du temps mort nécessaire au transfert des produits de l'unité de dosage vers les organes distributeurs.

4. Procédé selon l'une quelconque des revendications précédentes,
caractérisé en ce que
le calculateur (6) calcule par anticipation le mouvement où l'on atteint l'extrémité du champ, pour couper les organes distributeurs.

5. Procédé selon l'une quelconque des revendications précédentes,
caractérisé en ce que
le calcul de l'endroit se fait à partir du déroulement du mouvement précédent (par extrapolation).

6. Procédé selon l'une quelconque des revendications précédentes,
caractérisé en ce que
le calcul par anticipation se fait dans le calculateur (6) à partir d'une carte mise en mémoire en liaison avec le mouvement effectif.

7. Procédé selon l'une quelconque des revendications précédentes,
caractérisé en ce que
le calculateur (6) contient en mémoire les caractéristiques de réglage et de temps de l'installation de dosage, et tient compte de ces caractéristiques pour le calcul du temps mort.

8. Procédé selon l'une quelconque des revendications précédentes,
caractérisé en ce que
le calculateur (6) contient en mémoire la longueur des chemins de transfert et le temps de transfert du produit entre l'unité de dosage et les organes distributeurs.

9. Procédé selon l'une quelconque des revendications précédentes,
caractérisé
par des moyens pour modifier la largeur de travail et la commande des organes de dosage et des organes distributeurs pour augmenter ou diminuer la largeur de travail et l'adapter au contour du champ, mis en mémoire dans le calculateur (6) et, en fonction de la forme du contour, on commande la variation de la largeur de travail et cela également par un calcul par anticipation.

10. Procédé selon l'une quelconque des revendications précédentes,
caractérisé en ce que
la modification de la largeur de travail se réalise par la mise en route d'une partie de la largeur ou par une modification des éventails d'épandage.
